# FASCICULE DE BREVET EUROPEEN

(11) **EP 0 847 201 B1**
(45) Date de publication et mention de la délivrance du brevet: **05.06.2002**
(21) Numéro de dépôt: 97480088.0
(22) Date de dépôt: 05.12.1997
(51) Int. Cl.: H04N 7/18

(54) **Système de suivi de mobiles en temps réel sur un terrain de sports**
Echtzeit-Folgesystem für sich bewegende Körper auf einem Sportfeld
Real time tracking system for moving bodies on a sports field

(30) Priorité: 06.12.1996 FR 9615244
(43) Date de publication de la demande: 10.06.1998
(73) Titulaire: David, Antoine, 06100 Nice (FR)
(72) Inventeur: David, Antoine, 06100 Nice (FR)
(74) Mandataire: Bonneau, Gérard

(56) Documents cités:
- EP-A- 0 690 628
- EP-A- 0 714 081
- WO-A-94/17636
- US-A- 5 363 297
- PATENT ABSTRACTS OF JAPAN vol. 011, no. 147 (P-575), 14 mai 1987 & JP 61 284681 A (KOMATSU LTD), 15 décembre 1986,
- THOUVENOT N: "URBAN VIDEO SURVEILLANCE SYSTEM" ELECTRICAL COMMUNICATION, 1 avril 1994, pages 143-147, XP000461584
- PATENT ABSTRACTS OF JAPAN vol. 012, no. 053 (P-668), 18 février 1988 & JP 62 201381 A (SUMITOMO HEAVY IND LTD), 5 septembre 1987,

## Description

### Domaine technique

La présente invention concerne le suivi et la fourniture en temps réel des données concernant les déplacements des mobiles se trouvant sur un espace clos, et en particulier un système de suivi en temps réel de mobiles sur un terrain, notamment un terrain de sports.

### Etat de la technique

L'idée de mieux connaître l'activité effective de déplacements des mobiles (joueurs, arbitres, balle, engins...) au cours de compétitions sportives n'est pas nouvelle en soi. Les entraîneurs ont toujours cherché à mieux décrire, connaître l'activité effective de leurs sportifs ou de leurs adversaires. Les enseignants, les responsables de retransmissions ont toujours cherché à représenter de façon plus lisible et compréhensible, la prestation effective des participants aux événements sportifs, pour celui qui apprend, ou celui qui regarde.

L'évolution actuelle des retransmissions audiovisuelles d'événements sportifs se fait, à l'évidence, dans le sens de la recherche d'une augmentation de la participation du spectateur. Nous en voulons pour preuve la multiplication des caméras, des commentaires d'experts, la présentation des stratégies supposées en début de rencontre ou encore les débats organisés en fin de partie.

Jusqu'à présent, les systèmes d'observation qui existent sont par nature très peu précis (données peu exploitables) ou très lourds à mettre en oeuvre (architecture générale, outils de capture, nombre d'opérateurs). D'une manière générale, dans l'état de la technique, les systèmes d'observation et de traitement concernant l'analyse des sports collectifs et de "duel" existants sont peu satisfaisant soit par la pauvreté des informations qu'ils sont capable de traiter, soit par leur imprécision, soit par leur manque de robustesse, soit par leur difficulté de mise en place.

Un système destiné à traiter des situations de compétition réelle ne doit en aucun cas apporter de modification à ces situations de compétition, et il doit s'accommoder des conditions habituelles et diverses de ces situations, en particulier quant au lieu ou au moment ou elles se déroulent. Il ne doit pas, par conséquent, nécessiter la mise en place d'équipement particulier concernant les joueurs ou les autres mobiles (Capteurs actifs, Emetteurs... )

D'une manière générale, les systèmes d'observation et d'analyse des déplacements et des efforts des joueurs de sports de duels ou de sports collectif n'arrivent pas à offrir un suivi à chaque instant des positions des différents mobiles sans risque de confusion ou de mauvaise identification de ces derniers ou sans mettre en place un dispositif susceptible de modifier de conditions de compétition réelles (Capteur, récepteur...).

Les sports collectifs sont souvent basés sur la possession du ballon, enjeu de convoitise. Par conséquent, tous les acteurs participant au jeu sont amenés a se rapprocher, voire se confronter physiquement au cours du jeu. Tous ces cas de figures posent des problèmes liés à l'identification et la perte d'identification des mobiles résultant d'un phénomène d'occlusion (Joueurs qui se confondent, qui passe l'un devant l'autre, qui se touchent...). Autant de situations qui troublent le traitement de tous les systèmes actuels basé sur le suivi des joueurs de sports à partir d'images vidéo.

L'acquisition de données concernant le déplacement des mobiles en sport pose le problème du calcul de la position exacte de chaque mobile (Joueur, ballon...) à chaque instant avec le plus de précision possible et en minimisant le risque de confusion entre les joueurs. On connaît dans l'état de la technique plusieurs systèmes et procédés ayant l'ambition d'observer, d'analyser et de traiter les informations relatives aux déplacements des joueurs en sport collectifs.

La plupart de systèmes existants sont des systèmes très rudimentaires qui se présentent sous la forme de claviers de saisie d'un certain nombre d'informations concernant l'observation et l'analyse des sports collectifs. Ces dispositifs sont gérés par des opérateurs manuels. Certains sont dédiés à des opérations de comptage et ne servent qu'à la capture et à la gestion de données de type "événement" (Passe, dribble, tir...) sans pouvoir prétendre analyser le déplacement des différents acteurs observés. Leur précision est liée à la rapidité et à la précision d'exécution du ou des opérateurs chargés de la saisie des données. La mise en oeuvre de tels systèmes en temps réel est assez contraignante et nécessite souvent d'y affecter plusieurs opérateurs de saisie.

D'autres systèmes, basés sur le même principe, ont la prétention de traiter et de quantifier le déplacement des différents acteurs de la scène analysée, ils font tous appel à des opérateurs humains qui pointent manuellement, sur une représentation graphique du terrain ou bien sur des séquences numérisées, à partir de claviers ergonomiques, de grilles magnétiques ou d'écrans tactiles, les positions successives des mobiles participant à l'événement analysé. Les aléas de la fréquence de pointage et l'approximation de la position exacte générées par l'action des différents opérateurs ne permettent pas d'extraire des informations précises sur la position exacte et donc la trajectoire réelle et la vitesse instantanée du joueur. Ces systèmes ne permettent donc pas une analyse précise ni une modélisation fidèle de l'action effective du joueur en termes de quantité et de qualité de déplacement. De plus, ces systèmes ne sont pas adaptables aux contraintes de performance que requière l'analyse de ces paramètres dans l'objectif d'un traitement en temps réel.

Il existe dans l'état de la technique des systèmes d'acquisition de position de mobiles à partir de sources vidéo. Ainsi, le document EP-A-0.714.081 décrit un système de suivi automatique d'un mobile en temps réel sur un espace clos comprenant une caméra en position fixe, des moyens d'acquisition en temps réel des données concernant la position instantanée du mobile à partir des images fournies par la caméra et une ou plusieurs caméras en position mobile permettant d'obtenir des données supplémentaires à celles fournies par la caméra fixe.

Le fait de pouvoir suivre plusieurs mobiles simultanément sur le terrain est déjà connu du brevet US-5.363.297 qui concerne un système de suivi automatique de joueurs utilisant plusieurs caméras en position fixe. Mais ce brevet ne propose aucune solution pour automatiser la ré-identification des "mobiles perdus" et fait appel à des opérateurs humains pour procéder à cette ré-identification, ce qui tend à alourdir sa mise ne place et à diminuer sa fiabilité, voir à remettre en cause son adaptation aux contraintes d'un traitement en temps réel. Ces systèmes ne présentent qu'un niveau d'autonomie très limité. En effet un mobile perdu ne peut être retrouvé par le système de façon automatique, cette limitation étant directement liée à l'emploi de caméras fixes.

De façon générale, ces systèmes sont tous confrontés aux problèmes posés par les occlusions entre les joueurs et n'arrivent pas à apporter des réponses concrètes à ces problèmes en dehors de l'intervention d'un opérateur humain chargé de résoudre la perte d'identification d'un mobile suivi. Ils sont basés sur des architectures "semi-automatiques" dans lesquelles le système de suivi automatique des mobiles se repose sur les corrections d'un ou de plusieurs opérateurs humains en cas de conflit ou d'erreur.

Ces systèmes et procédés, bien que prétendant pouvoir être adaptés à des situations d'analyse et de traitement en temps réel, ne sont généralement pas adaptables aux exigences de rapidité que nécessite cette contrainte. Ils ont besoin de faire appel à plusieurs opérateurs humains et leur temps de réponse est souvent trop long pour pouvoir prétendre à une analyse fiable, performante et continue d'un événement de sports collectif en temps réel. De plus, leur méthode d'analyse d'image se base la plupart du temps sur une soustraction de l'image de référence et une analyse des différences d'images trames à trames. Or l'état de l'art dans le domaine du traitement de l'image a prouvé que ces méthodes sont très limitées en ce qui concerne la faculté de détection et la précision de la détection des différents mobiles. Les résultats fournis ne correspondent pas à la précision demandée par l'analyse fine que requière l'étude des déplacements des mobiles en sports collectifs.

Ainsi, ces systèmes et procédés connus ne permettent pas un traitement et une analyse fiable et continue en temps réel des données relatives au déplacement des différents acteurs participant à une manifestation sportive sans pour autant apporter des modifications même minimes aux conditions des compétitions réelles.

### Exposé de l'invention

C'est pourquoi le but de l'invention est de fournir un système du type mentionné ci-dessus mais utilisant des caméras vidéo analogiques ou numériques motorisées, automatiquement asservies à un moteur intelligent de production de trajectoires, qui, par un mécanisme de requêtes/réponses, va utiliser les possibilités de commande de cadrage de ces caméras asservies, pour aller lever les ambiguïtés et pertes d'identification, au cours du suivi des mobiles.

L'objet de l'invention est donc un système de suivi automatique de mobiles en temps réel sur un espace clos, notamment des joueurs évoluant sur un terrain de sports, comprenant une pluralité de caméras en position fixe couvrant l'espace clos et permettant des prises de vues des mobiles, des moyens d'acquisition en temps réel de données numériques concernant la position instantanée individuelle de chacun des mobiles, les données étant obtenues à partir des images fournies par la première pluralité de caméras, et des moyens de production des trajectoires de chacun des mobiles à partir des données en temps réel fournies par les moyens d'acquisition. Le système comprend au moins une caméra en position mobile et des moyens d'assistance à la vision interconnectés entre les moyens de production des trajectoires et la ou les caméras en position mobile. Les moyens de production des trajectoires comprennent un module d'évaluation de la situation présente pour détecter les cas de perte d'identification d'un mobile et de façon générale les problèmes rencontrés au cours du suivi, et un module de génération des requêtes pour formuler des requêtes aux moyens d'assistance à la vision en réponse au module d'évaluation de la situation présente, les moyens d'assistance à la vision commandant alors le positionnement et le fonctionnement de la ou des caméras en position mobile dans le but d'obtenir des données supplémentaires sur un des mobiles.

### Description brève des figures

Les buts, objets et autres caractéristiques de l'invention seront mieux comprises à la lecture de la description qui suit faite en référence aux dessins dans lesquels:
la figure 1 représente un schéma synoptique d'un mode de réalisation préféré du système selon l'invention,
la figure 2 représente un bloc diagramme d'un tube de suivi selon un premier mode de réalisation,
la figure 3 représente un bloc diagramme d'un tube de suivi selon un deuxième mode de réalisation,
la figure 4 représente principalement un bloc diagramme du moteur de production des trajectoires du système selon l'invention,
la figure 5 représente principalement un bloc diagramme du module d'assistance à la vision du système selon l'invention, et
la figure 6 représente l'algorithme de suivi des mobiles effectué dans chacun des tubes de suivi du système selon l'invention.

### Description détaillée de l'invention

Etant donné l'état de la technique, la présente invention a pour but de fournir un procédé audio vidéo et informatique d'acquisition et d'analyse automatique des déplacements relatifs aux positions à chaque instant d'une ou de plusieurs personnes et objets évoluant sur un terrain de sport.

Plus particulièrement l'invention concerne un système autonome pour le suivi des joueurs et la fourniture en temps réel des données concernant le déplacement des acteurs identifiés d'une rencontre sportive, à partir d'images vidéo uniquement. Il permet d'accéder en temps réel à une source d'informations nouvelles concernant la quantification et l'évaluation des performances physiques et tactiques des acteurs sportifs. Il s'agit d'un système automatique dans lequel l'intervention humaine est quasi inexistante, ils est totalement autonome et susceptible d'adapter le type de traitement nécessaire à la situation et au contexte donné par l'utilisation des techniques de l'intelligence artificielle (Base de connaissance, planification, ordonnancement des taches...)

A cet effet, la présente invention concerne un procédé audio vidéo et informatique d'acquisition et d'analyse des déplacements relatifs aux positions à chaque instant d'une ou de plusieurs personnes et objets évoluant sur un terrain de sport présentant les caractéristiques ci-dessous:
A/ Un dispositif de prise de vue et de gestion des tubes
B/ Une moteur de suivi des mobiles et de reconstruction automatique des trajectoires
C/ Un module d'aide à la vision
D/ Un module de paramètrage des images numériques
E/ Une station opérateur
F/ Un réseau Haut Débit
G/ Un serveur d'images
H/ Un serveur de données brutes
I/ Un serveur de données traitées

### A/ Organe de prise de vue et de gestion de tubes

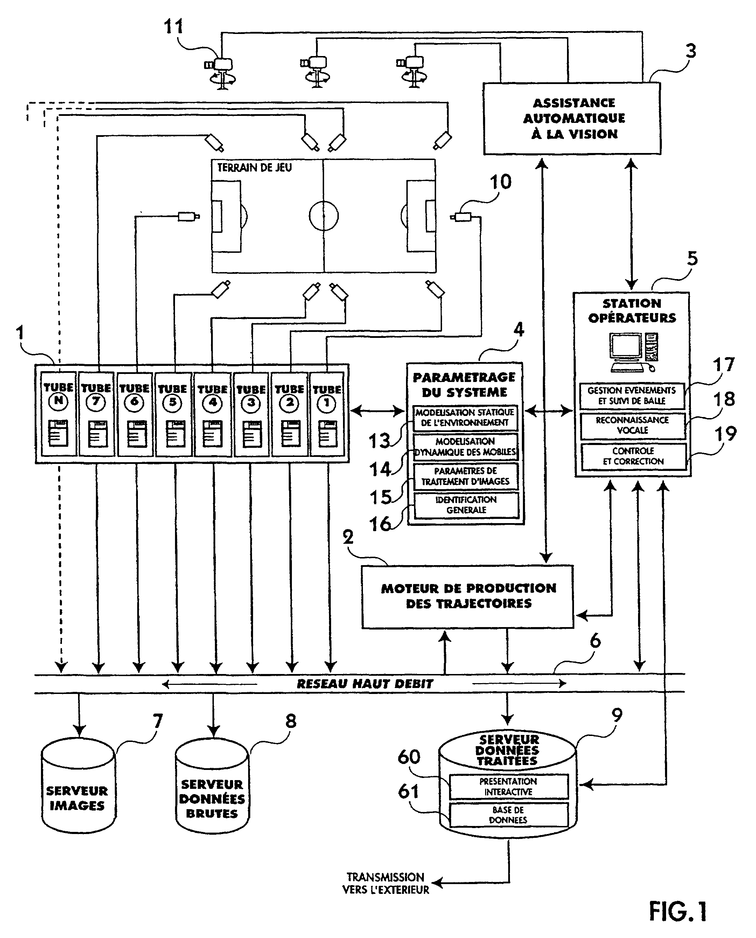

Comme illustré sur la figure 1, il est composé d'un dispositif de prise de vue vidéo (10) et d'un ensemble de tubes (1), chaque tube étant relié à une caméra.

La tâche de production des trajectoires identifiées des acteurs de la scène observée est assurée par le fonctionnement conjoint du dispositif de caméras (10), de l'organe de gestion des tubes de suivi (1), de l'organe moteur de production des trajectoires (2) et de l'organe d'assistance automatique à la vision (3). Les tubes de suivi sont des processus indépendants qui ont pour fonction d'observer le champ vu par une source vidéo, d'en extraire les mobiles perçus et de les suivre le plus longtemps possible. Les tubes de suivi renseignent de façon synchrone le Moteur de Production de Trajectoires (2) par l'intermédiaire d'un réseau informatique haut débit (6), d'un serveur d'images (7) et d'un serveur de données brutes (8). Le moteur de production des trajectoires fusionne les données issues des différents tubes dans un modèle général de la scène, reconstitue les trajectoires (positions 3D et synchronisation temporelle) et gère les identifications. En cas de problème d'identification, il a à son service, un ensemble de ressources pour lui permettre de recouvrer de façon dynamique l'identification des trajectoires. Ces ressources sont constituées d'un ensemble de caméras motorisées (11), des interfaces de pilotage et de bibliothèques de traitements d'image spécifiques pour la reconnaissance des joueurs et du ballon. Voir la description du module d'Assistance à la vision (3).

Le dispositif de prise de vue est composé d'une ou plusieurs caméras vidéo (10), couvrant l'espace de jeu à analyser et caractérisé en ce que les contraintes concernant la prise de vue (position et orientation des caméras) sont simples. Les recommandations concernant le positionnement des caméras se résument à les situer le plus en hauteur possible (compte tenu de l'architecture du site et des moyens mis en oeuvre), de manière fixe (sans mouvement ni zoom) et offrir une image permettant dans son cadre la visualisation de repères dont les dimensions réelles (métriques) sont connues (lignes du terrain, éléments d'architecture, repérages). Le dispositif ne nécessite donc en aucun cas, de positionnement précis des dites caméras ni même la connaissance exacte de ce positionnement.

La solution développée ici, étant strictement basée sur l'analyse numérique des images, deux solutions peuvent être retenues pour le choix des caméras : soit des caméras vidéo analogiques standard, soit des caméras vidéo numériques qui offrent l'avantage de ne pas nécessiter de numérisation.

En ce qui concerne le nombre et le recouvrement des caméras, plusieurs possibilités sont offertes. Les sports se pratiquant sur petits terrains comme le basket-ball ou le handball nécessitent la mise en place de deux caméras disposées soit à la verticale du terrain en vue aérienne, soit de manière inclinée au coin du terrain en angle à 90°. Cependant, il est préférable de bénéficier d'un dispositif de 4 caméras, chaque caméra couvrant un quart du terrain en vis-à-vis et formant un angle de 90° entre elles. Les sports se pratiquant sur grand terrain comme le football, le rugby ou le football américain nécessitent la mise en place d'un dispositif plus lourd pouvant aller jusqu'à 16 caméras, en fonction des possibilités physiques d'installation et du niveau de précision de la mesure souhaitée.

Un tube de suivi représente, au niveau de l'architecture globale du système, un ensemble de matériels et logiciels destinés à renseigner le moteur de production des trajectoires (2), par l'intermédiaire du réseau informatique haut débit (6), du serveur d'images (7), et du serveur de données brutes (8). Il alimente le serveur d'images (7) avec les images numériques compressées de sa source vidéo analogique, et il effectue les traitements de vision par ordinateur (traitements du signal image, détection de primitives, poursuite de mobiles, ...), dont les résultats sont transmis au serveur de données brutes (8).

Le module local de suivi des mobiles est caractérisé en ce qu'il effectue, image par image le suivi des mobiles détectés en relevant les coordonnées et en enregistrant leurs positions respectives.

Les tubes de suivi comportent les moyens logiciels et matériels suivants :
- un module d'acquisition de données vidéo numériques est constitué d'une caméra (10), (si les caméras utilisées sont analogiques il faut disposer des moyens de numérisation, inclus dans les schémas dans ce bloc fonctionnel (10)).
- des modules de traitement numériques comportant des algorithmes de traitement élémentaires (dits de bas niveau), configurables par l'intermédiaire du module de paramètrage (4) et des stations opérateur (5), et des moyens de calcul rapides pour les mettre en oeuvre. Ces modules travaillent ensemble de façon coopérative est sont basés sur les traitement suivant: seuillages, seuillages par hystérésis, détection de contours, détection de facettes, histogrammes, histogrammes de couleur, opérateurs de convolution, médians, segmentation colorimétrique, masques, algorithmes de suivi de personnes multiples adaptés aux conditions de rencontres de sports collectifs, ...
- des modules utilitaires, ce sont des chaînes de traitements automatiques qui remplissent des fonctions utiles et nécessaires au suivi, comme des traitements de réduction du bruit dans l'image, de décompositions pyramidales pour présélectionner les zones de l'image susceptibles de contenir des objets intéressants, l'adaptation des modèles constatés dans l'image (nettoyage des éléments non pertinents de l'observation de la scène). Ces chaînes de traitement sont utilisées, par exemple, pour annuler les petits déplacements et vibrations des caméras fixes, par reconnaissance des éléments du décor de la scène et repositionnement des paramètres calculés de la caméra.

Les traitements de l'image de bas niveaux (détections des primitives de l'image, gestion des pixels, ...) sont inclus dans le même bloc fonctionnel que l'acquisition des données vidéo numériques (un tube de suivi), mais leur mise en oeuvre technologique peut revêtir différentes formes, selon le déploiement de matériel, l'architecture du site. On peut distinguer deux formes de fonctionnement :

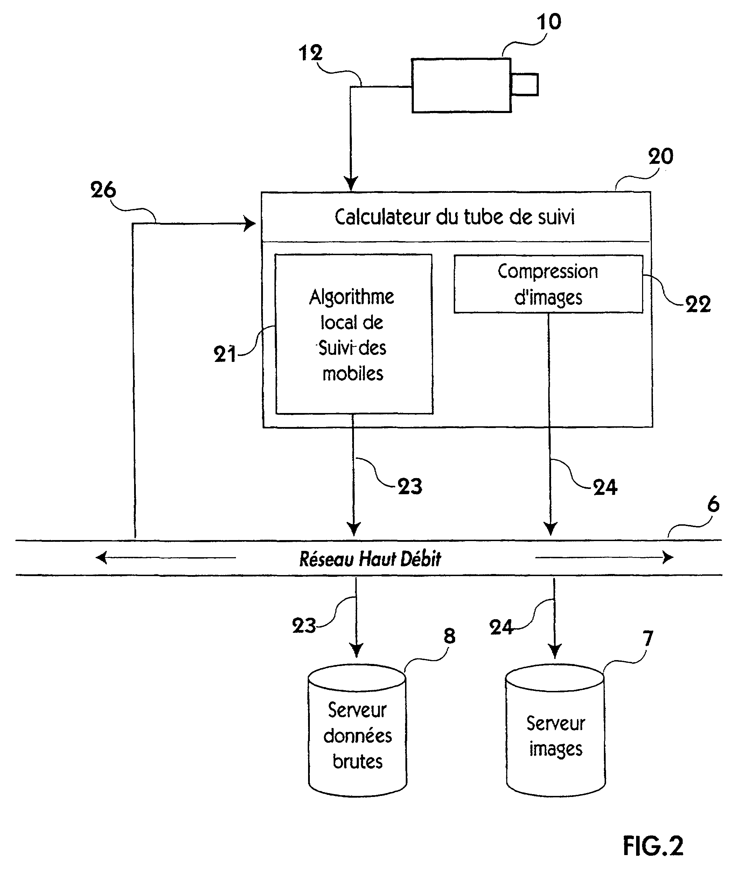

Fonctionnement de type 1 (Figure 2) : L'image vidéo (13) est numérisée et traitée directement par un calculateur (20) couplé à la source d'images vidéo numériques, pour fournir les trajectoires des mobiles au serveur de données brutes (8), d'une part et pour fournir des images numériques compressées de façon adaptative au serveur d'images (7) pour stockage. On entend par compression adaptative, le procédé qui permet de ne stocker que les pixels relatifs aux mobiles de la scène, et ignorer ceux qui concernent le décor et le fond de la zone observée.

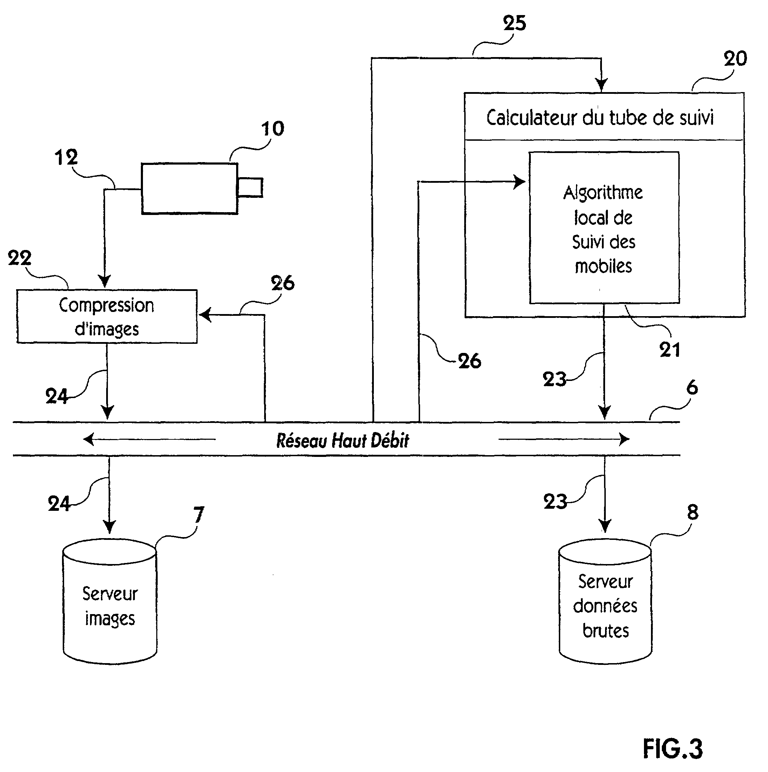

Fonctionnement de type 2 (Figure 3) : L'image vidéo est numérisée et compressée par une méthode standard (de type M-JPEG), transmise, par l'intermédiaire du réseau haut débit (6) au serveur d'images (7). Le calculateur dédié au traitement de cette source vidéo (20), devra décompresser les images avant de pouvoir effectuer tout traitement.

On entend par calculateur de suivi (20), les moyens de calcul informatiques qui mettent en oeuvre les algorithmes de suivi et de détection des mobiles, basés sur des chaînes de traitement d'image, ces moyens de calculs se présentent physiquement sous la forme de stations de travail dédiées à ces algorithmes ou bien de processeurs résidents sur des cartes de numérisation et de traitement d'images spécialisées.

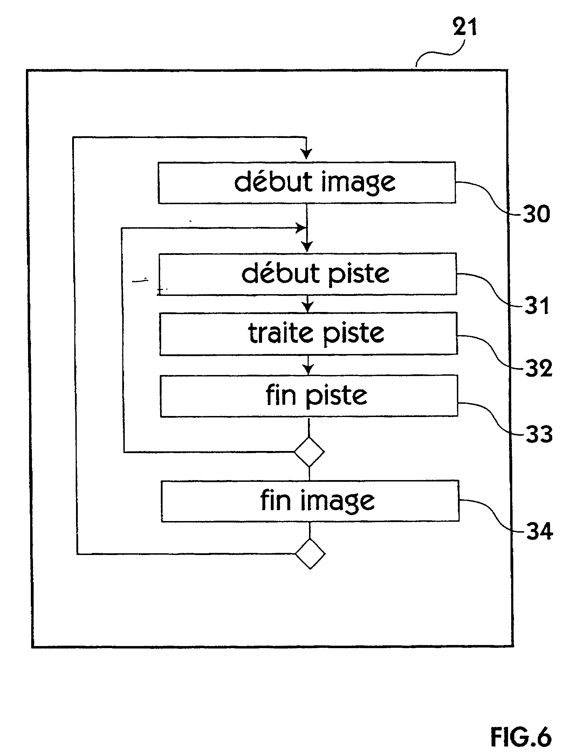

La figure 6 illustre le schéma de fonctionnement de l'algorithme de suivi (21). Cet algorithme qui effectue le suivi local des mobiles au niveau d'un tube de suivi est différent selon le type de fonctionnement choisi :
- Fonctionnement de type 1 :
   On utilise deux tâches parallèles qui partagent les données numérique du procédé de numérisation du tube.
   Pour chaque nouvelle image (30), une tâche (a) prend en charge la compression (22), la transmission (24) de l'image au serveur d'images (7) et la mise à jour de la base de synchronisation entre les tubes (40). Une autre tâche, effectue le suivi des mobiles présents dans l'image courante (31, 32, 33).
   Description du fonctionnement de la tâche spécifique de suivi (31, 32, 33) :
   - stabilisation de l'image (vibrations, erreurs de numérisation, ...)
   - rectification automatique du paramètrage entre l'image et la réalité.
   - les mobiles potentiels de l'images sont détectés : s'ils correspondent à des cibles en cours de traitement, ces cibles sont confirmées et l'on procède à la mesure de leur position dans l'image courante, après une prédiction de cette mesure. On met à jour les paramètres de suivi pour cette cible (vitesse, taille relative, état, ...)
   - les cibles qui n'ont pas pus être confirmées, ou qui sont sorties du champ de la caméra sont abandonnées par ce tube et le moteur de production (2) en est informé.
   - On transmet les différentes mesures au serveur de données brutes (8).
- Fonctionnement de type 2 :
   - L'image de la caméra (10) du tube est numérisée (12), compressée et transmise au serveur de d'images (7). Le calculateur (20) dédié au tube, acquiert cette image la décompresse et procède aux traitements décrits dans le fonctionnement (31, 32, 33).

   La logique de suivi au niveau des tubes n'est pas fondamentalement différente, dans le sens où, les mobiles sont d'abord suivis au niveau de chaque source vidéo, et ensuite mises en correspondance par le moteur (2); seule la mise en oeuvre physique diffère.

### B/ L'Organe Moteur de Production des Trajectoires (2)

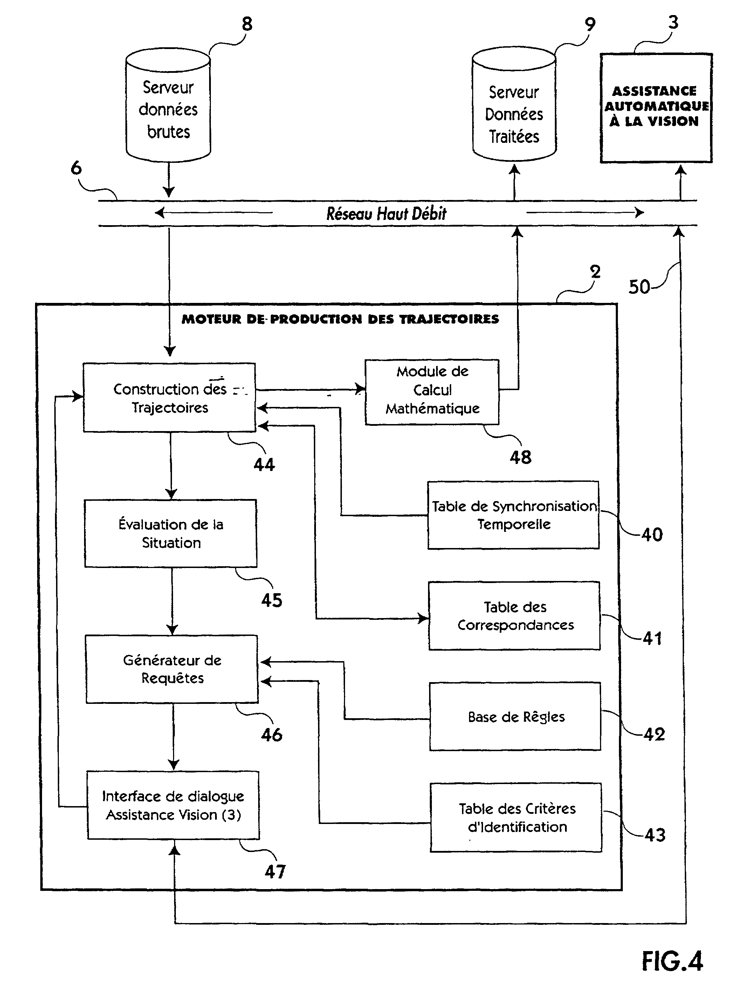

Le moteur de production des trajectoires illustré sur la figure 4 a pour fonction de fusionner les informations de suivi issues des différents tubes de suivi (1), de reconstituer les déplacements des mobiles dans le plan du terrain en s'appuyant sur le paramètrage (4), et de fournir pour chaque mobile une information d'identification (nom et numéro de joueur, arbitres, ballon). Le fonctionnement du moteur de production des trajectoires est basé sur la mise en oeuvre d'algorithmes issus de techniques de l'Intelligence Artificielle dans la mesure où il comporte un module d'évaluation et d'interprétation de la situation présente (45) (configuration spatio-temporelle des mobiles, nombre de cibles non identifiées, ...), d'une base de règles pour le choix des critères pertinents à la résolution de cette situation (42), et d'un module de dialogue et de pilotage logiciel d'organe de perception commandés (Assistance à la Vision).

Pour ce faire il a à sa disposition une interface de dialogue avec le module d'Assistance à la Vision (47) qui compte un ensemble de caméras motorisées (11) qu'il peut asservir à la position d'un mobile en déplacement. Ce dernier répond aux requêtes du Moteur de Production des Trajectoires (2) en effectuant des traitements spécifiques (53) sur les situations observées, comme faire un agrandissement de la situation problématique et ainsi extraire l'information d'identification par des traitements de reconnaissance des caractères intrinsèques de acteurs, mais aussi par des moyen de reconnaissance automatique de caractères (exemple : reconnaissance automatique du numéro du maillot du joueur).
- Le module de Production des trajectoires (44) accède aux données fournies par les tubes de suivi (1), par l'intermédiaire du Serveur de Données Brutes (8) et du réseau (6). Il construit et maintient une Table des Correspondances (41) entre les différents mobiles suivis par les différents tubes de suivi. Cette table des correspondances contient les liens entre les tubes de suivi pour chaque mobile. Ainsi, en utilisant conjointement la Table de Synchronisation Temporelle (40), il reconstruit la trajectoire réelle mesurée de chaque mobile en considérant les mesures les plus significatives. Ce module a aussi en charge d'attribuer à chaque mobile suivi son identification réelle (nom et numéro du joueur, arbitre, ballon). Quand une cible est suivie sans encombre et que son identification est connue, les données sont envoyées au serveur de données traitées (9).
- Le module d'Evaluation de la Situation Présente (45) permet de détecter les cas de perte de l'identification d'une cible, les cas de confusion et les problème rencontrés au cours du suivi. Il transmet une liste des problèmes rencontrés au module de génération des requêtes (46) auprès de l'Assistance à la Vision (3).
- Le module de Génération des Requêtes (46) formule, pour chaque problème rencontré par le module d'évaluation de la situation, une requête auprès de l'organe d'assistance à la vision (3). Pour ce faire, il utilise les informations de la Base de Règles de comportement (42), pour choisir le meilleur traitement adapté au problème rencontré, cette base est ressemble dans son fonctionnement à une Base de Connaissance d'un système expert, car elle contient des élément heuristiques et s'enrichit au fur et à mesure des traitements. Le Module de Génération des requêtes utilise aussi une Table des Critères d'Identification des Mobiles (43), table générée à partir des données dynamiques de paramètrage des classes de mobiles présents dans la scène (14). Une fois le meilleur traitement déterminé, le générateur de requête formule un message de requête que l'Interface de Dialogue avec l'Assistance à la Vision se charge de transmettre physiquement via le réseau. Ce message contient le type de requête (par exemple, ré-identification, dénombrement,...), l'urgence avec laquelle cette requête doit être traitée, le délai maximum pour fournir une réponse, les données de poursuite si la requête concerne une cible en déplacement et la méthode de traitement d'image à employer pour résoudre le problème.
- L'Interface de Dialogue avec l'Assistance Vision (47) se charge de transmettre physiquement les requêtes via le réseau, et de réceptionner les réponses de l'Assistance Vision. Lorsqu'elle reçoit des messages de réponse, elle les transmet au module de Production des trajectoires (44) qui utilise ces éléments de réponse pour complimenter la base de données traitées, ré-identifier les cibles perdues, retrouver les cibles après une grosse confusion. La situation est alors à nouveau évaluée par (45), et de nouvelles requêtes seront formulées. Ainsi, par un fonctionnement bouclé, le système est à même de résoudre de façon autonome les problèmes de suivi et d'identification des tous les joueurs, de l'arbitre et du ballon.
- Un module mathématique de calcul et de représentation graphique caractérisé en ce qu'il génère des fichiers informatiques comportant des éléments de calcul relatifs au déplacement des mobiles appartenant à la scène analysée et destinés à alimenter les éléments en aval du système (comme le modeleur 2D/3D, le module de rendu et d'analyse des performances des joueurs, le module de gestion de base de données). L'information fournie à ces modules se présente sous la forme d'une base de données des positions successives des différents mobiles identifiés, enrichie des informations des consoles opérateurs (événements, (5)), et de divers traitements directement liés à ces positions, comme par exemple les calculs de vitesse et d'accélération.

### C/ L'Organe d'Assistance à la Vision (3)

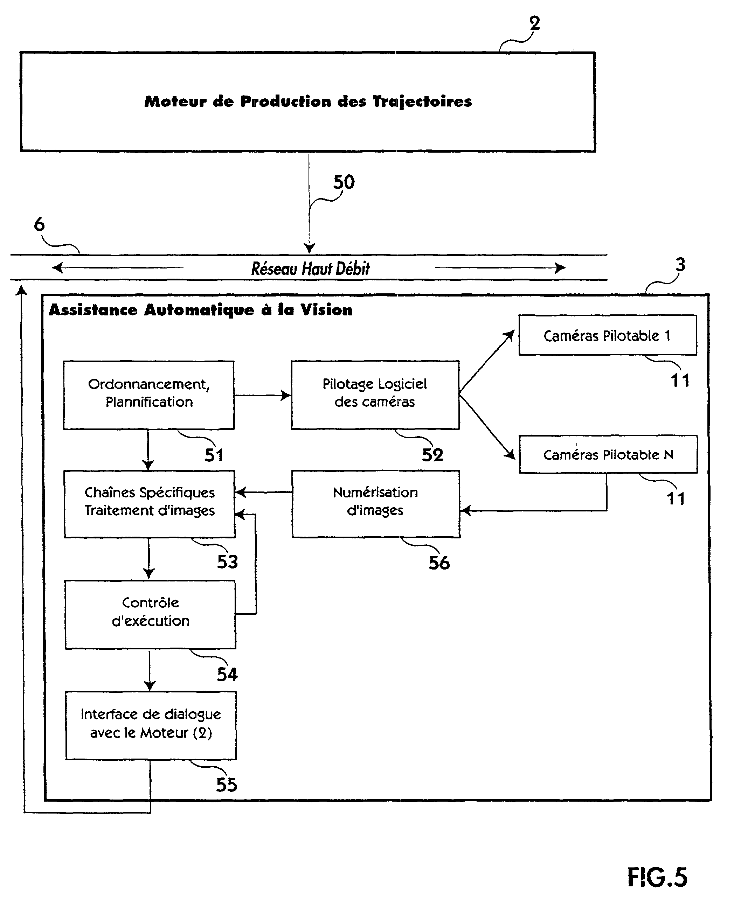

L'organe d'Assistance automatique à la vision illustré sur la figure 5 réceptionne les requêtes (50) du moteur de production (2), ces requêtes comportent la description des traitements à effectuer et l'ordre de priorité à y accorder.

L'organe d'Assistance à la vision automatique est caractérisé en ce qu'il comporte des moyens de perception motorisés (11), que le moteur de production de trajectoires peut asservir et piloter pour répondre à des besoins spécifiques issus du traitement global de la scène, et ainsi résoudre des problèmes de suivi sur certains mobiles, confirmer une identification incertaine, proposer un zoom "intelligent" aux opérateurs (5), ...
- L'Assistance à la Vision (3) reçoit les requêtes du Moteur de Production des Trajectoires (2) sous la forme de messages. Ces Messages sont décodés par l'Interface de Dialogue avec le Moteur (55).
- Les requêtes sont transmises au Module d'Ordonnancement et de Planification (51), qui, en fonction de l'ordre d'urgence des requêtes qui lui sont soumises et des ressources disponibles (caméras mobiles (11), calculateurs de numérisation et de traitement d'images (53) et (56)), va sérialiser ces requêtes et commander les modules adéquats. Chaque requête est alors convertie en séries de commandes pour les actionneurs des caméras mobiles par le pilotage logiciel des caméras (52), afin de fournir le cadrage demandé. Ce cadrage peut être fixe (exemple : demande d'observation d'une zone définie du terrain) ou bien asservie à la position d'un mobile en déplacement, dans ce cas le cadrage demandé représente le mobile à identifier en gros plan au fur et à mesure de son déplacement. L'image formée est numérisée (56), le planificateur (51) déclenche le traitement d'image qui lui a été demandé et essaie d'identifier le (ou les) critère(s) de la requête.
- En fin de traitement, le module de contrôle d'exécution (54) fournie une évaluation de la qualité de la réponse à la requête. Si cette évaluation est positive, elle est transmise avec les informations fournies par la chaîne de traitement (53), via l'interface de dialogue avec le Moteur de production (55), et le réseau (6), au moteur de production. Dans le cas contraire, le module de contrôle d'exécution raffine les paramètres et la chaîne de traitement est exécutée à nouveau; ce processus est réitéré sur les images courantes tant que la limite de temps impartie n'est pas dépassée. Si les traitements demandés n'aboutissent pas, un constat d'échec est retourné au Moteur de Production (2). Celui-ci soumettra plus tard une nouvelle requête basée sur une autre évaluation de la situation.

### D/ L'organe de paramètrage du système (4)

L'organe de paramètrage (4) est composé d'une interface de calibrage des tubes, d'une interface de paramètrage de traitement d'images et d'une interface d'identification générale. Cet organe assume la liaison entre la stations opérateurs (5) et le module de gestion des tubes (1). Les réglages sont effectués par un des opérateurs humains de la station opérateurs (5) dans une phase préalable au traitement. Ils sont effectués une fois pour toute sur les différentes interfaces reliées aux écrans servant de base au traitement numérique.

L'interface de paramètrage des tubes opère un calcul par projection inverse de perspective sur les images numériques en provenance des tubes (1) afin de retrouver les coordonnées des positions des mobiles acquises dans le plan de l'écran, dans un repère orthonormé relatif à la surface de terrain de jeu. Ce traitement pouvant être réalisées à la source (en temps réel ) ou à posteriori (en temps légèrement différé).

L'interface de paramètrage de traitement d'images permet à l'opérateur humain de la station opérateurs de sélectionner à l'aide d'une bibliothèque, les paramètres les plus pertinents pour traiter le type d'image numérique que les tubes (1) véhiculent.

L'interface d'identification générale permet à l'opérateur de saisir les paramètres concernant la rencontre de sport à traiter ainsi que l'identification des mobiles suivi par le système.

### E/ La stations opérateurs (5)

La stations opérateurs (5) est composée d'un module de gestion des événements et de suivi de balle (17) , d'un module de reconnaissance vocale (18), d'un module de contrôle et de correction (19).

Le module de gestion des événements et de suivi de balle (17) est généralement composé d'un clavier spécialisé et d'un écran de visualisation. Il est caractérisé en ce qu'il permet à un ou plusieurs opérateurs humains de saisir en temps réel ou en temps différé des informations concernant le jeu. Ces informations se définissent sous la forme d'événements liés au jeu (temps morts, temps de jeu effectif...) ou aux acteurs participants au jeu (Tir, passe, interception, duel...) et sont caractérisées en ce qu'elles ne peuvent pas être générées par le système de manière automatique. Il peut s'agir d'information concernant la possession du ballon et permettant, en corrélation avec les informations fournies par les tubes (1) , au moteur de production des trajectoires (2), de reconstruire le trajet du ballon. Une fois ces événements saisis par les opérateurs, ils sont aussi tôt transmis par le réseau haut débit à une des tables de correspondance(41) du moteur de production de trajectoires (2) et enregistrés dans une table de manière chronologique pour être exploité par le serveur de données traitées (9). Ces informations sont saisies par l'intermédiaire de périphériques standards (souris, claviers...) ou bien spécifiques (claviers adaptés à la saisie d'événements sportifs ou bien par le module de reconnaissance à la parole (18).

Le module de contrôle et de correction (19) aide le moteur de production des trajectoires (2) à résoudre des problèmes vraiment inextricables dans des contraintes de temps réel. Ce module est vu par le moteur de production des trajectoires (2) comme une ressource d'identification, dans le cas où les procédures automatiques n'aient pas pu résoudre les problèmes posés dans les contraintes de temps qui leur était imparti. Le moteur de production des trajectoires (2), commande alors à l'assistance vision, sous la forme d'une requête, la présentation à l'opérateur de correction (19), d'une vue en gros plan du mobile problématique et la demande d'information manquante. Après réponse de ce dernier, l'information est véhiculée par l'assistance à la vision (3) sous la forme d'une réponse.

### F/ Le réseau haut débit (6)

Le réseau haut débit assure le dialogue et le cheminement des données entre les différents organes du systèmes. Le débit de ce réseau doit être suffisamment élevé pour supporter le transfert en temps réel d'images compressées provenant de plusieurs sources, et il doit comporter des procédures de secours pour assurer l'intégrité des données en cas de problèmes de transmission.

### G-H Les serveurs d'images numériques (7) et de données brutes (8)

Les serveurs d'images numériques (7) et un serveur de données brutes (8) sont composés de stations informatiques à stockage rapide et caractérisés en ce qu'il récupèrent les images numériques et les données brutes produites par les différents tubes et les mettent à disposition du moteur de reconstruction de trajectoires (2) à des fins de traitement. Le transfert de ces données est assumé par le réseau informatique haut débit (6).

### I/ Le serveur de données traitées (9)

Le serveur de données traitées (9) est alimenté par le moteur de construction de trajectoires via le réseau haut débit chargé de récupérer les différentes positions de chaque mobile identifié et suivi par le moteur à chaque instant.

Le serveur de données traitées est caractérisé en ce qu'il comporte un module de présentation interactive (60) et une base de données (61).

Le module de présentation interactive (61) permettant de visualiser les différents traitements issus du calculs des positions des mobiles est caractérisé en ce qu'il comporte:
a) Une interface de présentation des trajectoires statiques en 2D (sur plan à plat, vue de dessus) comportant un module de sélection de gabarits prenant en compte la durée de la scène analysée, le sport concerné ainsi que les contraintes liées au format d'édition des dites représentations graphiques.
b) Un module d'animation graphique 2D permettant de visualiser une séquence analysée sous la forme d'une animation graphique vue de dessus rejouant la scène choisie à vitesse réelle, au ralentie ou "pas à pas" et caractérisé en ce qu'il comporte des outils de paramètrage offrant la possibilité de rajouter de l'information (Légende, Illustrations graphiques, Symboles, flèches...) ainsi que d'agir sur certains facteurs de représentation de la dite scène (sélection des trajets à afficher, mode de représentation des mobiles, nombres de position rémanentes...).
c) Un module d'animation graphique 3D caractérisé en ce qu'il propose une animation graphique de la scène choisie en 3 dimensions suivant le point de vue choisi par l'utilisateur (visualisation artificielle multi-points de vue).
d) Un module de représentation graphique prenant en compte le cumul de n séquences analysées et caractérisé en ce qu'il propose une visualisation 2D sous la forme d'une illustration graphique permettant de rajouter de l'information et d'attribuer un sens tactique à l'événement choisi composé de n séquences analysées (visualisation des points d'impact de la balle, des secteurs potentiels d'intervention, des espaces effectifs occupés par les joueurs, les collectifs...).

Le module de gestion de base de données (61) permettant d'effectuer des calculs statistiques sur un ensemble de séquences analysées et de stocker les différents traitements est caractérisé en ce qu'il comporte:
a) Un module de gestion statistique des différents calculs générés lors de l'analyse des séquences
b) Un module de présentation des résultats issus du cumul de plusieurs séquences
c) Un module d'archivage automatique des résultats obtenus
d) Un module de formatage des données pour transmission vers des ordinateurs ou stations de travail distantes.

## Revendications

1. Système de suivi automatique de mobiles en temps réel sur un espace clos, notamment des joueurs évoluant sur un terrain de sports, comprenant une pluralité de caméras (10) en position fixe couvrant ledit espace clos et permettant des prises de vues desdits mobiles, des moyens d'acquisition (1, 7, 8) en temps réel de données numériques concernant la position instantanée individuelle de chacun desdits mobiles, lesdites données étant obtenues à partir des images fournies par ladite première pluralité de caméras, et des moyens (2) de production des trajectoires de chacun desdits mobiles à partir des données en temps réel fournies par lesdits moyens d'acquisition;
ledit système étant **caractérisé**
**en ce qu'**il comprend au moins une caméra (11) en position mobile et des moyens d'assistance à la vision (3) interconnectés entre lesdits moyens de production des trajectoires (2) et la ou les caméras en position mobile, et
**en ce que** lesdits moyens de production des trajectoires comprennent un module d'évaluation de la situation présente (45) pour détecter les cas de perte d'identification d'un mobile et de façon générale les problèmes rencontrés au cours du suivi, et un module de génération des requêtes (46) pour formuler des requêtes auxdits moyens d'assistance à la vision en réponse audit module d'évaluation de la situation présente, lesdits moyens d'assistance à la vision commandant alors le positionnement et le fonctionnement de la ou des caméras en position mobile dans le but d'obtenir des données supplémentaires sur un desdits mobiles.

2. Système selon la revendication 1, dans lequel lesdits moyens d'assistance à la vision (3) comprennent
- une interface de dialogue (55) pour communiquer avec lesdits moyens de production des trajectoires,
- un module d'ordonnancement et de planification (51) qui, en fonction de l'urgence des requêtes en provenance desdits moyens de production des trajectoires, procède à l'ordonnancement desdites requêtes, et
- un module de pilotage logiciel (52) des caméras en position mobile (11) qui convertit lesdites requêtes ordonnancées en séries de commandes d'au moins une caméra en position mobile.

3. Système selon l'une des revendications 1 ou 2, dans lequel lesdits moyens d'acquisition de données comprennent une pluralité de tubes de suivi (1), un serveur d'images (7) et un serveur de données brutes (8), chacun desdits tubes étant associé respectivement à une caméra de ladite pluralité de caméras en position fixe (10) et comportant un calculateur de suivi (20) chargé de mettre en oeuvre un algorithme de suivi et de détection des mobiles (21) de manière à fournir les trajectoires desdits mobiles (21) audit serveur de données brutes et fournir des images compressées audit serveur d'images.

4. Système selon la revendication 3, dans lequel lesdits moyens de production des trajectoires (2) comprennent en outre
- un module de construction des trajectoires (44) qui accède aux données emmagasinées dans ledit serveur de données brutes (8),
- une table des correspondances (41) pour établir les liens entre lesdits tubes de suivi (1) pour chaque mobile,
- une table de synchronisation temporelle (40) pour reconstruire la trajectoire réelle de chaque mobile, et
- une interface de dialogue (47) chargée de transmettre les requêtes auxdits moyens d'assistance à la vision et en recevoir des réponses.

5. Système selon la revendication 4, dans lequel lesdits moyens de production des trajectoires (2) comprennent en outre une base de règles (42) pour fournir audit module de génération des requêtes (46) le traitement adapté au problème rencontré, ladite base de règles contenant des éléments heuristiques et s'enrichissant au fur et à mesure des traitements.

6. Système selon l'une des revendications 1 à 5, comprenant en outre une station d'opérateurs (5) comportant
- un module de gestion des événements (17) composé d'un clavier et d'un écran permettant à un ou plusieurs opérateurs de saisir en temps réel ou en temps différé, des informations concernant les mobiles, et
- un module de contrôle et correction (19) pour permettre à un ou plusieurs opérateurs de résoudre les problèmes difficiles en temps réel.

7. Système selon la revendication 6, comprenant en outre des moyens de paramètrage de système (4) interconnectés entre lesdits moyens d'acquisition de données (1) et ladite station d'opérateurs (5) pour permettre à un ou plusieurs opérateurs de saisir, au moyen de ladite station d'opérateurs, les paramètres impliqués et en particulier l'identification des mobiles.

8. Système selon la revendication 6, comprenant en outre un serveur de données traitées (9) recevant les données provenant desdits moyens de production des trajectoires (2) et comprenant un module de présentation interactive (60) permettant de visualiser la trajectographie statique ou animée des mobiles.

9. Système selon la revendication 8, dans lequel ledit module de présentation interactive comprend des moyens de représentation graphique prenant en compte le cumul de plusieurs séquences analysées qui permet à l'opérateur une visualisation 2D sous la forme d'une illustration graphique permettant de rajouter de l'information et d'attribuer un sens tactique à l'événement choisi composé desdites séquences analysées.

## Patentansprüche

1. System zur automatischen Verfolgung von sich auf einem umschlossenen Gebiet bewegenden Körpern in Echtzeit, insbesondere von sich auf einem Sportfeld bewegenden Spielern, enthaltend eine Vielzahl von ortsfesten Kameras (10), die dieses umschlossene Gebiet abdecken und diese sich bewegenden Körper aufnehmen können, Mittel (1, 7, 8) zur Erfassung von digitalen Daten in Echtzeit, die die individuelle momentane Stellung jedes der sich bewegenden Körper betreffen und die aus Bildern erhalten werden, die von dieser ersten Vielzahl von Kameras geliefert werden, und Mittel (2) zur Erzeugung der Bewegungsbahnen jedes der sich bewegenden Körper aus von den Erfassungsmitteln gelieferten Echtzeit-Daten,
**dadurch gekennzeichnet,**
**dass** es mindestens eine ortsbewegliche Kamera (11) und Bildunterstützungsmittel (3) aufweist, die zwischen die Mittel (2) zur Erzeugung der Bewegungsbahnen und die ortsbewegliche/n Kamera/s geschaltet sind, und
**dass** die Mittel zur Erzeugung der Bewegungsbahnen ein Modul (45) zur Auswertung der gegenwärtigen Situation aufweisen, um die Fälle des Verlusts der Identifizierung eines sich bewegenden Körpers und allgemein die bei der Verfolgung auftretenden Probleme zu erfassen, sowie ein Modul (46) zur Erzeugung von Abfragen, um als Reaktion auf das Modul zur Auswertung der gegenwärtigen Situation Abfragen bei den Bildunterstützungsmitteln zu formulieren, wobei die Bildunterstützungsmittel nun die Positionierung und den Betrieb der ortsbeweglichen Kamera/s steuern, um zusätzliche Informationen über einen der sich bewegenden Körper zu erhalten.

2. System nach Anspruch 1, bei dem die Bildunterstützungsmittel (3) folgendes aufweisen:
- eine Dialogschnittstelle (55) zum Kommunizieren mit den Mitteln zur Erzeugung der Bewegungsbahnen,
- ein Ordnungs- und Planungsmodul (51), das in Abhängigkeit der Dringlichkeit der von den Mitteln zur Erzeugung der Bewegungsbahnen kommenden Abfragen eine Ordnung dieser Abfragen vornimmt, und
- ein Modul (52) zur Software-Steuerung der ortsbeweglichen Kameras (11), das die geordneten Abfragen in Reihen von Steuerbefehlen mindestens einer ortsbeweglichen Kammer umwandelt.

3. System nach einem der Ansprüche 1 oder 2, bei dem die Datenerfassungsmittel eine Vielzahl von Verfolgungsröhren (1), einen Bildserver (7) und einen Rohdatenserver (8) aufweisen, wobei jede dieser Röhren jeweils einer Kamera der Vielzahl von ortsfesten Kameras (10) zugeordnet ist und einen Verfolgungsrechner (20) aufweist, der die Aufgabe hat, einen Algorithmus der Verfolgung und Erfassung der sich bewegenden Körper (21) durchzuführen, so dass die Bewegungsbahnen der sich bewegenden Körper (21) dem Rohdatenserver geliefert werden und komprimierte Bilder dem Bildserver geliefert werden.

4. System nach Anspruch 3, bei dem die Mittel (2) zur Erzeugung der Bewegungsbahnen außerdem folgendes aufweisen:
- ein Modul (44) zum Aufbauen der Bewegungsbahnen, das auf die im Rohdatenserver (8) gespeicherten Daten zugreift,
- eine Zuordnungstabelle (41) zur Herstellung der Verbindungen zwischen den Verfolgungsröhren (1) für jeden sich bewegenden Körper,
- eine Zeitsynchronisationstabelle (40) zur Rekonstruktion der tatsächlichen Bewegungsbahn jedes sich bewegenden Körpers und
- eine Dialogschnittstelle (47), die die Aufgabe hat, die Abfragen zu den Bildunterstützungsmitteln zu übertragen und von diesen Antworten zu erhalten.

5. System nach Anspruch 4, bei dem die Mittel (2) zur Erzeugung der Bewegungsbahnen außerdem eine Regelbasis (42) aufweisen, um dem Modul (46) zur Erzeugung der Abfragen die an das angetroffene Problem angepasste Behandlung zu liefern, wobei die Regelbasis heuristische und sich im Maße des Fortschreitens der Behandlungen anreichernde Elemente enthält.

6. System nach einem der Ansprüche 1 bis 5, das außerdem eine Operatorstation (5) besitzt, die folgendes aufweist:
- ein Modul (17) zur Lenkung der Ereignisse, das aus einer Tastatur und einem Bildschirm besteht, die einem oder mehreren Operators die Erfassung der die sich bewegenden Körper betreffenden Informationen in Echtzeit oder Verzögerungszeit erlauben, und
- ein Kontroll- und Korrekturmodul (19), um einem oder mehreren Operators die Lösung der schwierigen Probleme in Echtzeit zu gestatten.

7. System nach Anspruch 6, das außerdem Mittel (4) zur Systemparametrisierung aufweist, die zwischen die Datenerfassungsmittel (1) und die Operator-Station (5) geschaltet sind, um einem oder mehreren Operators die Erfassung der implizierten Parameter und insbesondere der Identifizierung der sich bewegenden Körper mit Hilfe der Operator-Station zu gestatten.

8. System nach Anspruch 6, das ferner einen Server (9) für behandelte Daten aufweist, der die von den Mitteln (2) zur Erzeugung der Bewegungsbahnen kommenden Daten empfängt und ein Modul (60) zur interaktiven Darstellung aufweist, das die Sichtdarstellung der statischen oder bewegten Bahnaufzeichnung der sich bewegenden Körper gestattet.

9. System nach Anspruch 8, bei dem das Modul zur interaktiven Darstellung Mittel zur graphischen Darstellung aufweist, die die Summierung mehrerer analysierter Sequenzen berücksichtigen, was dem Operator eine zweidimensionale Bilddarstellung in Form einer graphischen Abbildung gestattet, die es erlaubt, Informationen hinzuzufügen und dem aus diesen analysierten Sequenzen zusammengesetzten Ereignis eine taktische Richtung zuzuweisen.

## Claims

1. A real time automatic tracking system for moving bodies on an enclosed field, notably players moving around on a sports field, comprising a plurality of cameras (10) in a fixed position covering the said enclosed field and enabling shots of said moving bodies, means (1, 7, 8) for real time acquisition of digital data concerning the instantaneous individual position of each said moving bodies, said data being obtained from the pictures provided by the said first plurality of cameras, and means (2) for the production of each said moving bodies trajectories from the real time data provided by said acquisition means;
said system being **characterized**
**in that** it comprises at least one camera (11) in a fixed position and means for vision assistance (3) interconnected between said trajectories production means (2) and the camera(s) in a fixed position, and
**in that** said trajectory production means comprise a present situation evaluating module (45) for detecting the moving bodies identification losses cases and generally the problems met during the tracking process, and a queries generating module (46) for formulating queries to said vision assistance means in response to said present situation evaluating module, said vision assistance means then controlling the positioning and functioning of the camera(s) in a fixed position in the aim of obtaining supplementary data on said moving bodies.

2. The system according to claim 1, in which said means for vision assistance (3)comprise :
- A dialogue interface (55) to communicate with said trajectories production means,
- a scheduling and planning module (51) which, regarding to the urgency of the queries coming from said trajectories production means, carries out the scheduling of said queries, and
- a software driving module (52) for driving the cameras in a mobile position (11) which converts said scheduled queries to driving series of at least one camera in a fixed position.

3. The system according one of the claims 1 to 2, in which said data acquisition means comprise a plurality of tracking tubes (1), a picture server (7) and a raw data server (8), each said tubes being associated respectively with one camera of said plurality of cameras in a fixed position (10) and comprising a tracking calculator (20) assigned to implement an algorithm of moving bodies tracking and detection (21) in order to provide said raw data server with the trajectories of said moving bodies and provide said picture server with the compressed pictures.

4. The system according to claim 3, in which said trajectories production means (2) further comprise :
- a trajectories construction module (44) which access to the data stored in said raw data server (8),
- a correspondences table (41) to set a link between said tracking tubes (1) for each moving bodies,
- a time synchronisation table (40) to reconstitute the real trajectory of each moving bodies, and
- a dialogue interface (47) assigned to transmit the queries to said vision assistance means and to receive the responses from them.

5. The system according to claim 4, in which said trajectories production means (2) comprise further a rules base (42) to provide said queries generating module (46) with the processing adapted to the problem met with, said rules base containing heuristic elements and enriching itself as processing goes along.

6. The system according to claim 1 to 5, comprising further an operators station (5) comprising :
- an events management module (17) composed of a keyboard and a display enabling one or more operators to capture in real time or in off-line , the information concerning the moving bodies, and
- a control and correction module (19) to enable one or more operators to resolve the difficult problems in real time.

7. The system according to claim 6, comprising further system configuration means (4) interconnected between said data acquisition means (1) and said operators station (5) in order to enable one or more operators to capture, by means of said operators station, the parameters involved and in particular the identification of the moving bodies.

8. The system according to claim 6, comprising further a processed data server (9) receiving the data coming from said trajectories production means (2) and comprising an interactive presentation module (60) enabling to visualize the static or animated trajectography of the moving bodies.

9. The system according to claim 8, in which said interactive presentation module comprises graphic representation means taking in charge the addition of several analysed sequences which enables the operator to have a 2D visualisation in the form of a graphic illustration enabling to add information and to attribute a tactical signification to the chosen event which is composed with said analysed sequences.
